# EUROPEAN PATENT APPLICATION

(11) **EP 4 253 098 A1**
(43) Date of publication of application: **04.10.2023**
(21) Application number: 22164833.0
(22) Date of filing: 28.03.2022
(51) Int. Cl.: B60C 23/02, B60C 23/04

(54) **VEHICLE DIAGNOSTICS**

(71) Applicant: VOLVO TRUCK CORPORATION, 405 08 Göteborg (SE)
(72) Inventor: IUSTIN, Roman, 435 37 Mölnlycke (SE)
(74) Representative: Zacco Sweden AB

(57) **Abstract**

An off-board diagnostic system located in site infrastructure, for example, in one or more walls, ceilings, and/or floors of a building in the site, for verifying functionality of one or more or all of the wireless sensors in a vehicle such as a heavy-duty vehicle is disclosed. The diagnostic system comprises an off-board antenna array arranged to interrogate one or more vehicle integrated wireless sensors and automatically locate and verify functionality of one or more or all of the vehicle integrated wireless sensors.

## Description

### TECHNICAL FIELD

The present disclosure relates to a diagnostic system for verifying functionality of one or more wireless sensors in a vehicle such as a heavy-duty vehicle.

### BACKGROUND

Modern vehicles, including autonomous, semi-autonomous, and automated vehicles, have various vehicle sensor systems. Such vehicles also have on-board infrastructure, including electronic control units, ECUs to control and/or interface with the various vehicle sensor systems. Such sensor systems can include both wired and wireless sensors of various different types. Some vehicles have different types ECUs in order to read different types of wireless sensors. One example of a vehicle ECU is a TPMS, Tyre Pressure Monitoring System, ECU which is capable of reading the pressure of a tyre respectively from one or more tyre pressure sensors along with some identifier for the tyre pressure sensor which acted as the data source of the tyre pressure data. Another example is a THS, Tyre Health System, ECU, which is capable of reading the temperature of a tyre from one or more tyre temperature sensors along with an identifier for the tyre temperature sensor which provided the temperature data. Another example ECU is a wireless sensor gateway, capable of reading multitude of wireless sensors with a multitude of radio/wireless interfaces, such as vibrations, carried weight, capacity of trailer, open/close doors of trailers, wireless cameras for advanced driving assistance systems, ADAS, etc.

Several types of vehicle service functionalities rely on such on-board infrastructure, however, if a vehicle experiences a service malfunction , it can be difficult to identify if the problem originates in the data provided by the sensor, for example, it may be being somehow corrupted, for example, if the problem is with a sensor itself or if the problem the vehicle infrastructure, in other words a vehicle ECU that is configured to read the sensor to obtain the data or how the ECU is processing the data it obtains. Whilst each specific type of sensor could be read directly, the large number of sensors which a modern vehicle has means this may be a very time consuming process to manually locate a faulty sensor.

The disclosed technology seeks to mitigate, obviate, alleviate, or eliminate various issues known in the art which affect how vehicles are able to share data for diagnostic purposes, such as, for example, those mentioned above.

### SUMMARY STATEMENTS

Whilst the invention is defined by the accompanying claims, various aspects of the disclosed technology including the claimed technology are set out in this summary section with examples of some preferred embodiments and indications of possible technical benefits.

The disclosed technology relates to providing an off-board diagnostics system which automatically reads the status of vehicle integrated sensors which may be integrated into site infrastructure or machinery.

A first aspect of the disclosed technology relates to an off-board diagnostic system for verifying functionality of one or more wireless sensors in a vehicle, for example a heavy-duty vehicle, the diagnostic system comprising at least one off-board antenna array located in a site infrastructure and arranged to interrogate one or more or all vehicle integrated wireless sensors and automatically locate and verify functionality of one or more of the vehicle integrated wireless sensors.

Advantageously, by providing an off-board diagnostics system in a site infrastructure, for example, in a diagnostics zone of the site infrastructure, it is possible to read one or more or all of the vehicle integrated wireless sensors at the same time, i.e. concurrently, whilst the vehicle remains within the site rather than having to remove the vehicle to a specialised diagnostics workshop.

In some embodiments, the at least one antenna array is located in a site infrastructure location comprising one of an assembly line infrastructure locations, a workshop infrastructure location, and a fuel / battery charging station infrastructure location.

Advantageously, when the off-board diagnostics system is integrated into site infrastructure, it allows machinery diagnostics can be run without requiring the vehicle to enter a workshop just for the wireless sensors to be read. This increases the ability to utilise the vehicle at the site as there is no loss of time involved with taking it to a workshop for diagnostics on the wireless sensors to be run. If different types of wireless sensors are read concurrently by the antenna arrays of the diagnostics system, it also reduces the amount of time that the diagnostics take to run.

It is also possible to integrate the antenna arrays in a workshop or electric charging station or other type of refuelling station location of a site so that as the vehicle is subject to some workshop service, the antenna arrays located in the workshop infrastructure are able to read one or more or all of the wireless sensors in the vehicle. Where the antenna arrays are located in an electric charging station or other type of refuelling station, as the vehicle refuels in a diagnostics zone at the electric charging or other type of refuelling station, one or more or all of the different wireless sensors in the vehicle may be read.

Examples of site could include, for example, harbours, mining sites, depots, warehouses, railway stations, airports, and the like as well as building sites and the like.

In some embodiments, an antenna array is located so that the vehicle can drive over it.

In some embodiments, an antenna array located in a site infrastructure floor or pit.

In some embodiments, the at least one antenna array is located in the site infrastructure comprising one of a floor or pit at a location in the floor or pit at a location where a vehicle is guided to drive over it.

In some embodiments, the sensors may be read by the antenna array whilst the vehicle drives by the antenna array, i.e. whilst the vehicle is not stationary, providing the vehicle moves at a slow enough speed to allow the wireless sensors to be read by the antenna array as it moves by and/or over and/or under the antenna array(s).

In some embodiments, the antenna array is located so that the heavy-duty vehicle can drive by it.

In some embodiments, at least one antenna array is located in site infrastructure at a location where a vehicle is guided to driving by it.

In some embodiments, the sensors may be read by the antenna array whilst the vehicle drives by the antenna array, i.e. whilst the vehicle is not stationary, providing the vehicle moves at a slow enough speed to allow the wireless sensors to be read by the antenna array as it moves by and/or over and/or under the antenna array(s).

In some embodiments, at least one antenna array is configured to interrogate one or more wireless sensors located on or integrated into a side of a cab and/or trailer of a heavy-duty vehicle. In some embodiments, at least one antenna array is configured to interrogate one or more wireless sensors located on or integrated into a side of a cab and/or trailer of a heavy-duty vehicle as the heavy-duty vehicle is guided to drive by it.

In some embodiments, the at least one antenna array is located so that the heavy-duty vehicle can drive under it.

In some embodiments, the at least one antenna array is located in site infrastructure at a location where the vehicle is guided to drive under it.

In some embodiments, the sensors may be read by the antenna array whilst the vehicle drives by the antenna array, i.e. whilst the vehicle is not stationary, providing the vehicle moves at a slow enough speed to allow the wireless sensors to be read by the antenna array as it moves by and/or over and/or under the antenna array(s).

In some embodiments, the antenna array is configured to interrogate one or more wireless sensors located on top of a cab and/or trailer of the heavy-duty vehicle.

In some embodiments, at least one antenna array comprises high-gain and low-gain antennas.

In some embodiments, the diagnostic system is provided in a diagnostics zone located in the site infrastructure, wherein the diagnostics zone is provided with markings to guide a vehicle to be correctly positioned for interrogation by the at least one off-board antenna array

In some embodiments, the diagnostic zone is provided with markings to guide a heavy duty vehicle to be correctly positioned for interrogation by the off-board antenna array.

In some embodiments, antenna elements of the at least one antenna array are optimized to be immersed in a permittivity material that is same as for the permittivity of a surface within which the antenna array is buried.

In some embodiments, the antennas of the at least one antenna array are optimized to be immersed in a permittivity material that is same as for the permittivity of a surface within which the antenna array is located in a site infrastructure.

In some embodiments, the at least one antenna array is configured to interrogate one or more wireless sensors located within or on at least one, some or all of: a vehicle or heavy-duty vehicle chassis, a vehicle or heavy-duty vehicle engine; and

a heavy-duty vehicle cab coupled to a heavy-duty vehicle trailer.

In some embodiments, the antenna array is further configured to charge wireless sensors capable of energy harvesting.

In some embodiments, at least one antenna array comprises a plurality of antenna elements connected to provide a cluster array and buried within a surface over, under or by which the heavy-duty vehicle passes in order to be interrogated by the cluster antenna array.

In some embodiments, the at least one antenna arrays comprise a plurality of circularly polarized antennas and/or a plurality of helical antennas.

In some embodiments, the site infrastructure comprises one or more parts of a building, wherein the parts of a building include at least one: floor of a building; ceiling of a building; and wall of a building. The disclosed aspects and embodiments may be combined with each other in any suitable manner which would be apparent to someone of ordinary skill in the art.

### BRIEF DESCRIPTION OF THE DRAWINGS

Some embodiments of the disclosed technology are described below with reference to the accompanying drawings which are by way of example only and in which:
Figures 1A and 1B schematically illustrate an off-board vehicle diagnostics system according to some embodiments of the disclosed technology; and
Figures 2A and 2B show schematically examples of antenna arrays according to some embodiments of the disclosed technology.

### DETAILED DESCRIPTION OF THE INVENTION

Aspects of the present disclosure will be described more fully hereinafter with reference to the accompanying drawings. The apparatus and method disclosed herein can, however, be realized in many different forms and should not be construed as being limited to the aspects set forth herein. Steps, whether explicitly referred to a such or if implicit, may be re-ordered or omitted if not essential to some of the disclosed embodiments. Like numbers in the drawings refer to like elements throughout.

The terminology used herein is for the purpose of describing particular aspects of the disclosure only, and is not intended to limit the disclosed technology embodiments described herein. As used herein, the singular forms "a", "an" and "the" are intended to include the plural forms as well, unless the context clearly indicates otherwise.

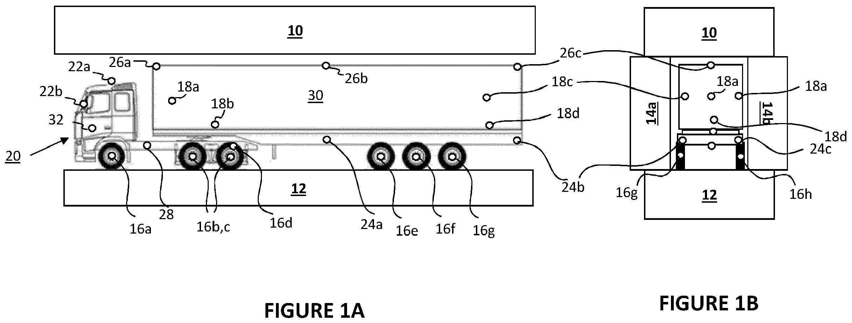

Figures 1A and 1B schematically illustrate an off-board diagnostics system for a vehicle 20, such as a heavy-duty vehicle, according to some embodiments of the disclosed technology. The vehicle, particularly if a heavy-duty vehicle, will have a number of different types of sensor systems and may have a very large number of sensors if the vehicle is an autonomous, semi-autonomous, remotely controlled or otherwise automated type of vehicle.

As illustrated in Figures 1A and 1B, the off-board diagnostic system for verifying functionality of one or more wireless sensors in a vehicle such as, for example, a heavy-duty vehicle 20. The diagnostics system includes at least one off-board antenna array 10, 12, 14a,14b arranged to interrogate one or more vehicle integrated wireless sensors 16a-h, 18a-d, 22a-c, 24a-c, 26a-c, 28 and 32. Each of the at least one antenna arrays is also configured to automatically locate and verify functionality of one or more, and in some embodiments, all, of the vehicle integrated wireless sensors 16a-h, 18a-d, 22a-c, 24a-c, 26a-c, 28 and 32 within its range of detection.

In some embodiments, the diagnostics system is a machinery or site-integrated diagnostics system, for example, a machinery or site-integrated diagnostics system for heavy duty vehicles.

As shown in Figures 1A and 1B, the vehicle 20 is a heavy duty-vehicle such as a truck cab and includes a trailer accessory 30 which has its own sensors 18a-18d and 26a-26b. References herein to the vehicle 20 and its sensors should be interpreted as including a reference to any accessories attached to the vehicle and their sensors, unless the context clearly dictates otherwise.

Figure 1A shows the vehicle 20 located with an site infrastructure diagnostic system provided with antenna arrays 10, 12 respectively above and below the vehicle 20 in Figure 1A. Figure 1B shows schematically how the vehicle 20 also has antenna arrays 14a, 14b on its left and right.

In some embodiments, the site infrastructure which is used in close proximity or interacts with the vehicle for other purposes includes the antenna arrays. This allows a variety of different types of sensors to have their performance independently verified and monitored and may not require any additional vehicle down-time. In Figures 1A and 1B various different types of sensor systems 16, 18, 22, 24, 26, 28, 32 are located within and/or integrated into the vehicle 20. For example, a sensor system 16 for the tyres in the example shown includes tyre pressure sensors and/or tyre temperature sensors 16a-16h for the vehicle cab and trailer tyres. Also shown schematically in Figure 1A is a front sensor system 22, for example, a perception/proximity sensor system for the vehicle may comprise one or more sensors 22b located to the front of the vehicle cab. A wireless telematics sensor system 22a may be integrated into the telematics system located at the top front of the vehicle cab. As shown in the Figures, trailer 30 also has a sensor system 18, for example, a temperature system if the trailer were to carry temperature sensitive goods, shown as sensors 18a-18d in Figures 1A to 1B, and a position and/or pose tracking set of sensors 26a to 26c integrated into or on the roof of the trailer, as well as tilt detection/levelling sensors 24a to 24c integrated in the trailer chassis. Sensor 28 may be another type of sensor, for example, a pitch-sensor for the trailer or the like. Sensor 32 may be an engine sensor for example.

Some examples of site infrastructure/machinery diagnostics systems according to the disclosed technology include diagnostics systems built into sites such as assembly lines, workshops, fuel / battery charging stations etc., etc.,. Such sites may be but are not limited to mining sites, depots, harbours, building sites, railway terminuses, airports, and the like.

The diagnostics system according to the disclosed technology comprises at least a plurality and preferably a full range of radio interfaces in order to operate with all possible types of wireless sensors. Example of radio interfaces: subGHz (315/433, 868/915), 2.4GHz IEEE802.11 xx, IEEE802.15.4, BT/BLE, UWB, NFC, loT etc. Depending on where the antennas are located at the site, providing the vehicle has sensors which are within range, the system will read and locate automatically all of the vehicle integrated sensors while vehicle is moving above, below or nearby it.

In some embodiments of the diagnostics system, the diagnostics system may need to use a reading protocol for each different type of sensor. However, in some embodiments, if all that is required is to assess if a sensor is operational, i.e. generating data and readable, the diagnostics system may not need to know its reading protocol. Instead a simple interrogation / reply sequence could suffice, without the diagnostics system needing to have a full or exact interpretation of the data that the sensor is providing. In other words, the off-board diagnostics system acts like a sniffer tool that is sensing wireless sensors without interpreted their data.

In some embodiments of the diagnostic system, the antenna array is located so that the vehicle 20 can drive over it, for example, such as the base antenna array shown 12 schematically in Figure 1A. For example, the base antenna array 12 may be located in a workshop floor or pit. The base antenna array 12 may be configured to interrogate one or more wireless sensors integrated within the base or lower region of the vehicle 20, such as in the chassis and/or engine of the vehicle 20. In some embodiments, the base antenna array may be specifically configured to interrogate one or more wireless tyre temperature or tyre pressure sensors for example, the tyre and/or pressure sensors 16a to 16h shown schematically in Figure 1A and 1B. Such sensors are likely to provide a stronger signal when scanned by the antenna array 12 located in the workshop floor or pit. The base antenna array 12 may also be configured specifically to also read other types of sensors which are located on or integrated within the base of the vehicle.

Advantageously, it is possible to integrate the diagnostic system's off-board antenna array in the floor of site infrastructure such that the diagnostics system is hidden and the antenna array is not visible at floor level. This may protect the antenna array from possible damage as the cables connecting the antennas to the other components of the diagnostics system can remain secure and safely away from the surface on which the vehicle is driving. Another advantage is the reading area which is provided from below of the chassis which might otherwise require a pit to obtain. The floor antenna system 12 is easily able to reach any wireless sensors 16a-16h, 24a-24c, 28, 32, integrated within the lower part of the vehicle, such as a chassis sensor 28, engine sensor 32 etc. This allows the the antenna array to interrogate one or more wireless sensors located in the chassis and/or engine of the heavy-duty vehicle.

As mentioned above, rreaching or reading a sensor may in some embodiments take the form of simply reading the signal strength so that there is no need to know the reading protocol for a particular sensor. This allows a malfunction to be diagnosed based on the received signal strength alone in some embodiments of the diagnostics system. In other embodiments, of course, a malfunction may be diagnosed instead or as well based on one or more characteristics of the sensor data received. A sensor malfunction may also be diagnosed if there is an absence of any detected signal where the signal should be expected.

In some embodiments, such as that shown in Figure 1B, the diagnostics system is instead or in addition provided with one or more antenna arrays located laterally to the vehicle, in other words, so that the vehicle 20 can drive by it. Such an antenna system 14a, 14b provided in side-walls or otherwise located to the side of the vehicle may be more suitably located to read sensors on surface of cab and the ones integrated on surfaces of trailers, such as sensors 18c, 18d, 24b, 24c, 16g, 16h shown in Figure 1B. In some embodiments accordingly, the antenna array 10 of the diagnostics systems is configured to interrogate one or more particular types of wireless sensors located on or integrated into a side of a cab and/or trailer of the heavy-duty vehicle,

For sensors provided on top of trailers or cab, that are not reached from the floor or side readings, the diagnostics system may be provided with an antenna array 10 located above target diagnostics zone in the site infrastructure. Such a location for the antenna array is better suited for reading high-level sensors such as those shown in Figures 1A and 1B as sensors 22a, 26a-26c. In some embodiments, the antennas may be configured to interrogate wireless sensors of a type which are more likely to be located on or integrated into the top of a vehicle, for example antenna arrays 24c and 26a-26c shown on the top of the cab 20 and trailer 30 respectively in Figures 1A and 1B. They may also detect sensors located high-up on the sides or within the vehicle. Examples of vehicle top-mounted or vehicle top-integrated sensors include, for example, position-based system sensors such as GPS sensors and the like. To position the vehicle under such an antenna array, ideally the antenna array is installed in site infrastructure or machinery at a location where a vehicle, for example, a heavy-duty vehicle, can drive under it. For example, in an infrastructure bridging area or mounted on a boom which can pass over the vehicle, or which the vehicle can pass under.

In some embodiments, a plurality of antenna elements are connected to provide a cluster array over, under or by which the heavy-duty vehicle passes in order to be interrogated by the cluster antenna array.

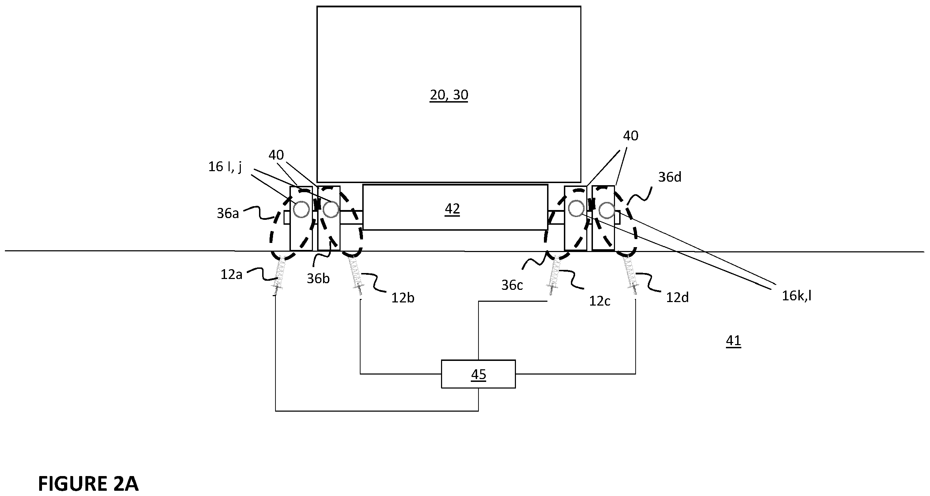

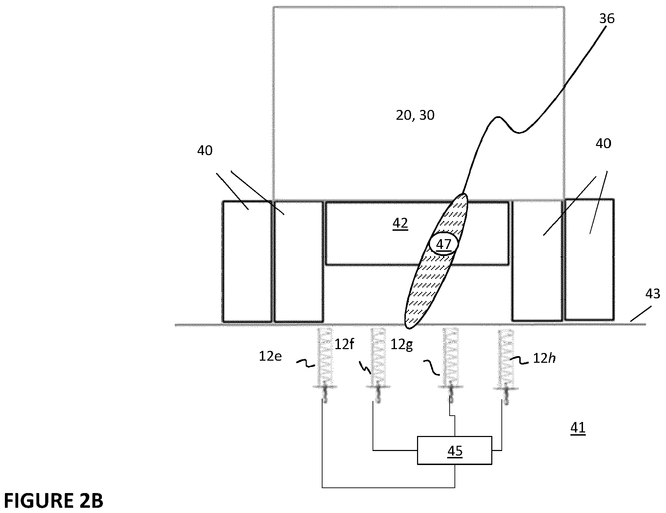

Figures 2A and 2B of the accompanying drawings illustrate schematically an base antenna array 12 of a diagnostics system according to the disclosed technology which comprises antennas 12a-12h buried in a sub-surface area 41 of a ground or floor 43 of site infrastructure.

Figure 2A shows a first cluster antenna array 12a-12d buried within the ground or a floor 41 of site infrastructure at points where the antennas 12a-12d are able to read temperature or pressure sensors 16i,j,k,l of tyres 40, alternatively, or in addition, they may be configured to read brake pad sensors and/or any other sensors which are located in their reading zones 36a,b,c,d, for example, sensors in the vehicle chassis 42. The sensors of the vehicle 20, 30 which are located within the antenna reading zones are interrogated by the antenna array 12 under the control of a processor or processing circuitry shown as 45.

One or more of the antenna arrays of the diagnostics system may also comprise a plurality of circularly polarized antenna elements in some embodiments, for example, in the embodiment shown schematically in Figure 2B, where the reading area 36 is able to detect a signal from sensor 47 in chassis 42. Antenna elements with circular polarization can provide an advantage over linear antenna elements in some situations where the wireless sensor placement might be arbitrary in a vehicle. By using a circular polarized antenna all wireless sensors will be read regardless their position / orientation towards the sensors array. Example of an antenna with circular polarization that fulfil this requirement is helix/helical antenna. Another advantage of such an antenna element is its axial size, which makes it easier to be integrated in the floor. A hole with same diameter as antenna cold be drilled in the floor and a dielectric loaded helix / helicon antenna could be easier placed inside it. Accordingly, in some embodiments, one or more of the antenna arrays of the diagnostics system comprise arrays of helical antennas, for example, as shown in Figures 2A and 2B.

In some embodiments of the diagnostic system, for example, the systems shown in Figures 2A and 2B, the antenna array comprises different antenna elements, in other words each antenna array comprises both high-gain and low-gain antennas in some embodiments. The high gain antenna elements may have >6dBi in some embodiments and the low gain antenna elements may have 3-6dBi in some embodiments. High gain antenna allow a longer read range 36a, 36b, 36c, 38d for localization of wireless sensors. The beam of such high-gain antennas could be mechanically or digitally steered.

In some embodiments, several antenna elements of an antenna array of the diagnostics system may be connected together in order to provide higher gain, required for reaching wireless sensors and for their location. As an example, combining 16 helix antenna elements with 5 turns each provide a cluster array with a 24dBi gain. Similar gain is obtained with a single helix with 80 turns. Therefore, same gain is obtained with shorter helix elements which are easier to integrate in the floor. Additionally, cluster array could be used to steer the beam and therefore scan the area for wireless sensors location, which is schematically shown in Figure 2B.

In some embodiments, for example, in the example embodiment of the diagnostics system shown in Figure 2A, a plurality of helical antennas 12a -12b area each provided within a site infrastructure floor portion 41 and are connected to processors/processing circuitry 45 of a computer such as, for example, a personal computer, PC, or processing unit, for example, a central processing unit, CPU, via a suitable interface. This allows the antenna array 12 to be controlled by a diagnostics tool or application running on the computer which is configured or configurable, and which may include a suitable human-machine interface, to allow for automatic or user-initiated sensor interrogations and analyzing received sensor signals.

When the diagnostic system's antennas interrogate a wireless sensor, such as the tyre temperatures and/or pressure sensors 16i,j,k,j shown schematically in Figure 2A, the wireless sensors 16i,j,k,l return a signal back to the antenna upon interrogation that induces an electromagnetic field, emf, inside the antenna/array coils/sensors. These emfs are digitized and analyzed by a suitable algorithm part of the diagnostics system. Many suitable algorithms are known in the art.

In some embodiments, the antenna elements of the antenna array are optimized to be immersed in a permittivity material that is same as for the permittivity of a surface within which the antenna array is buried, in other words, they are provided with the same permittivity as a concrete floor, wall or ceiling if buried in a concrete floor, wall or ceiling. For example, for a concrete floor, electrical permittivity may be (estimated) eps_r=5. Antenna elements such as helix/helicon, horn etc. are therefore dielectrically loaded with material that has same electrical permittivity. This enables the antennas to have a reduced size compared to if they had a permittivity which did not match that of their buried location and also enables the antenna integration in that environment to be optimized to take into account that it is free space (with eps_r=1).

In some embodiments, the diagnostic system zone area within the site infrastructure is provided with markings to guide a heavy duty vehicle to be correctly positioned for interrogation by an off-board hidden antenna array. Alternatively, vehicles operating in the defined site with one or more predetermined trajectories could be provided with one or more specific trajectories to areas of the site where infrastructure has been provided with a diagnostic system according to the disclosed technology.

For example, as shown in the embodiments shown in Figures 2A and 2B, the base antenna array 12 is inbuilt in the floor 41. As a vehicle drives along the surface of the diagnostic system interrogation zone, the base antenna array 12 is able to interrogate the vehicle sensors to determine if they are operational or not, and in some embodiments the diagnostic system may further process any data from the sensors to perform additional diagnostics. An indication of the base diagnostic zone sensor array, or of the other sensor arrays in the side-diagnostic zones and top diagnostic zone may be provided in some embodiments. For example, by using surface marks on the infrastructure in order to guide a vehicle driver.

If the vehicle is an autonomous vehicle, vehicle's camera sensors may be used in order to read the markings and to guide the vehicle through the testing zone of the sensor array.

Some types of wireless sensors integrated in vehicles may use batteries for their operation and use wireless energy harvesting to recharge their batteries to continue to operate. Accordingly, in some embodiments, the antenna array itself is further configured to charge wireless sensors capable of energy harvesting. For example, the antenna array may be supplemented by antennas which are configure to wirelessly recharge the battery power source(s) of the sensor systems. Advantageously, in some embodiments, this allows a sensor which is not producing data or which is not sufficiently charged to be charged so that it returns to operational status and/or so it can be further subjected to diagnostics.

In some embodiments, diagnostics are possible using the diagnostics system according to the invention even when the wireless sensors are not receiving power from the vehicle, for example, if the engine is off and/or if any ECUs that read those sensors operational.

Advantageously, this allows a diagnostics assessment to be made of wireless sensors completely independently from on-board infrastructure. It also enables workshops to run wireless sensors diagnostics without needing to start a vehicle's engine in some embodiments

The above embodiments of the disclosed technology accordingly provide an improved way for a diagnostic system to verify functionality of one or more wireless sensors in a vehicle, for example, a heavy-duty vehicle. Diagnostics tests can be run on different types of wireless sensors associated with one or more parts of the vehicle simultaneously rather than sequentially and as part of routine maintenance or repair of other parts of the vehicle. This allows for more frequent diagnostics to be performed which may improve the safe operation of the vehicles. Also, it allows for a new way of performing diagnostics which may help a vehicle avoid visits to workshops for diagnostics, maintenance and repairs.

References in the above disclosure to vehicle include references to heavy-vehicles. A heavy-vehicle, for example, may be a heavy-duty
vehicle which is an autonomous, semi-autonomous or automated heavy-duty vehicle. This may have one or more heavy-duty vehicle type electronic control units and an advanced driving system, ADS, or advanced driver assistance system, ADAS, both of which will be referred to by the acronym ADS herein, configured to make tactical decisions in some embodiments. A heavy-duty vehicle may comprise a wide range of different physical devices specific to the type of duties it is to perform as well as more components which may the same or similar for different types of heavy-duty vehicles, such as combustion engines, electric machines, friction brakes, regenerative brakes, shock absorbers, air bellows, and power steering pumps. These physical devices are commonly known as Motion Support Devices (MSD). The MSDs for a heavy-duty vehicle may be individually controllable, for instance such that friction brakes may be applied at one wheel, i.e., a negative torque, while another wheel on the vehicle, perhaps even on the same wheel axle, is simultaneously used to generate a positive torque by means of an electric machine. The autonomous operation of a heavy-duty vehicle is accordingly more complex than the autonomous operation of a more light-weight vehicle such as a car. For similar reasons performing diagnostics tests on a heavy duty vehicle, whether autonomous, semi-autonomous, automated or semi-automated, or manually drivable, is more complex and requires the transfer of large amounts of data more data than would be required for conventional vehicles. The vehicle diagnostics system according to the disclosed technology is accordingly in some embodiments a diagnostics system which is specifically suitably configured to handle diagnostics of such vehicles.

Those skilled in the art will also appreciate that the processor(s) and processing circuitry and the memory providing computer readable storage described herein above may refer to a combination of analog and digital circuits and/or one or more processors configured with software and/or firmware, for example, software and/or firmware stored in a memory. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

The vehicle's electronic control unit, ECU, comprises or is capable of controlling how signals are sent wirelessly via suitable antenna(s) in order for the vehicle 10 to communicate via one or more communications channels with remote entities, for example, the vehicle diagnostics tool.

The communication channels may be point-to-point, or use networks. The vehicle's ECU may also be configured to use, for example, cellular or satellite networks which support wireless communications. The wireless communications may conform to one or more public or proprietary communications standards, protocols and/or technologies, including but not limited to Global System for Mobile Communications (GSM), Enhanced Data GSM Environment (EDGE), high-speed downlink packet access (HSDPA), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11b, IEEE 802.11g and/or IEEE 802.11n), voice over Internet Protocol (VoIP), Wi-MAX, a protocol for email (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), and/or Instant Messaging and Presence Service (IMPS)), and/or Short Message Service (SMS)), or any other suitable communication protocol, including communication protocols not yet developed as of the filing date of this document.

The operating system of the vehicle may further various software components and/or drivers for controlling and managing general system tasks (e.g., memory management, storage device control, power management, etc.) which facilitate communication between various hardware and software components of the vehicle, these may not be shown in the Figures for the sake of clarity where such components would be apparent to one of ordinary skill in the art. For example, all of the components shown in Figure 5 require electrical power to operate, and the source of such electrical power is not indicated in the drawings for the same of clarity.

Where the disclosed technology is described with reference to drawings in the form of block diagrams and/or flowcharts, it is understood that several entities in the drawings, e.g., blocks of the block diagrams, and also combinations of entities in the drawings, can be implemented by computer program instructions, which instructions can be stored in a computer-readable memory, and also loaded onto a computer or other programmable data processing apparatus. Such computer program instructions can be provided to a processor of a general purpose computer, a special purpose computer and/or other programmable data processing apparatus to produce a machine, such that the instructions, which execute via the processor of the computer and/or other programmable data processing apparatus, create means for implementing the functions/acts specified in the block diagrams and/or flowchart block or blocks.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

The description of the example embodiments provided herein have been presented for the purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements, features, functions, or steps than those listed and the words "a" or "an" preceding an element do not exclude the presence of a plurality of such elements, features, functions, or steps. It should further be noted that any reference signs do not limit the scope of the claims, that the example embodiments may be implemented at least in part by means of both hardware and software, and that several "means", "units" or "devices" may be represented by the same item of hardware.

The various example embodiments described herein are described in the general context of methods, and may refer to elements, functions, steps or processes, one or more or all of which may be implemented in one aspect by a computer program product, embodied in a computer-readable medium, including computer-executable instructions, such as program code, executed by computers in networked environments.

A computer-readable medium may include removable and non-removable storage devices including, but not limited to, Read Only Memory (ROM), Random Access Memory, RAM), which may be static RAM, SRAM, or dynamic RAM, DRAM. ROM may be programmable ROM, PROM, or EPROM, erasable programmable ROM, or electrically erasable programmable ROM, EEPROM. Suitable storage components for memory may be integrated as chips into a printed circuit board or other substrate connected with one or more processors or processing modules, or provided as removable components, for example, by flash memory (also known as USB sticks), compact discs (CDs), digital versatile discs (DVD), and any other suitable forms of memory. Unless not suitable for the application at hand, memory may also be distributed over a various forms of memory and storage components, and may be provided remotely on a server or servers, such as may be provided by a cloud-based storage solution. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

The memory used by any apparatus whatever its form of electronic apparatus described herein accordingly comprise any suitable device readable and/or writeable medium, examples of which include, but are not limited to: any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry. Memory may store any suitable instructions, data or information, including a computer program, software, an application including one or more of logic, rules, code, tables, etc. and/or other instructions capable of being executed by processing circuitry and, utilized by the apparatus in whatever form of electronic apparatus. Memory may be used to store any calculations made by processing circuitry and/or any data received via a user or communications or other type of data interface. In some embodiments, processing circuitry and memory are integrated. Memory may be also dispersed amongst one or more system or apparatus components. For example, memory may comprises a plurality of different memory modules, including modules located on other network nodes in some embodiments.

In the drawings and specification, there have been disclosed exemplary aspects of the disclosure. However, many variations and modifications can be made to these aspects which fall within the scope of the accompanying claims. Thus, the disclosure should be regarded as illustrative rather than restrictive in terms of supporting the claim scope which is not to be limited to the particular examples of the aspects and embodiments described above. The invention which is exemplified herein by the various aspects and embodiments described above has a scope which is defined by the following claims.

## Claims

1. An off-board diagnostic system for verifying functionality of one or more wireless sensors in a vehicle, the diagnostic system comprising:
at least one an off-board antenna array located in a site infrastructure and arranged to:
interrogate one or more or all vehicle integrated wireless sensors; and
automatically locate and verify functionality of one or more of the vehicle integrated wireless sensors.

2. The diagnostic system of claim 1, wherein the vehicle is a heavy-duty vehicle.

3. The diagnostic system of claim 1 or 2, wherein the at least one antenna array is located in a site infrastructure location comprising one of:
an assembly line infrastructure location;
a workshop infrastructure location; and
a fuel / battery charging station infrastructure location.

4. The diagnostic system of any one of claim 1 to 3, wherein at least one antenna array is located in site infrastructure comprising one of a floor or pit at a location in the floor or pit at a location where a vehicle is guided to drive over it.

5. The diagnostic system of any one of claims 1 to 3, wherein at least one antenna array is located in site infrastructure at a location where a vehicle is guided to driving by it.

6. The diagnostic system of claim 5, wherein at least one antenna array is configured to interrogate one or more wireless sensors located on or integrated into a side of a cab and/or trailer of a heavy-duty vehicle as the heavy-duty vehicle is guided to drive by it.

7. The diagnostic system of any one of claims 1 to 3, wherein at least one antenna array is located in site infrastructure at a location where the vehicle is guided to drive under it.

8. The diagnostic system of claim 7, wherein at least one antenna array comprises a plurality of antenna elements connected to provide a cluster array buried within a site infrastructure surface over, under or by which the vehicle passes in order to be interrogated by the cluster antenna array.

9. The diagnostic system of any previous claim, wherein the diagnostic system is provided in a diagnostics zone is located in the site infrastructure, wherein the diagnostics zone is provided with markings to guide a vehicle to be correctly positioned for interrogation by the at least one off-board antenna array.

10. The diagnostic system of any one of the previous claims, wherein the antennas of the at least one antenna array are optimized to be immersed in a permittivity material that is same as for the permittivity of a surface within which the antenna array is located in a site infrastructure.

11. The diagnostic system of any one of the previous claims, wherein the at least one antenna array is configured to interrogate one or more wireless sensors located within or on at least one, some or all of:
a vehicle or heavy-duty vehicle chassis;
a vehicle or heavy-duty vehicle engine; and
a heavy-duty vehicle cab coupled to a heavy-duty vehicle trailer.

12. The diagnostic system of any one of the previous claims, wherein the antenna array comprises high-gain and low-gain antennas.

13. The diagnostic system of any one of the previous claims, wherein the antenna array is further configured to charge wireless sensors capable of energy harvesting.

14. The diagnostic system of any one of the previous claims, wherein the antenna array comprises at least one circularly polarized antenna and/or at least one helical antenna.

15. The diagnostics system of any one of the claims, wherein the site infrastructure comprises one or more parts of a building, wherein the parts of a building include at least one:
floor of a building;
ceiling of a building; and
wall of a building.
